# EUROPEAN PATENT SPECIFICATION

(11) **EP 3 002 987 B1**
(45) Date of publication and mention of the grant of the patent: **02.06.2021**
(21) Application number: 13887752.7
(22) Date of filing: 29.06.2013
(51) Int. Cl.: H04W 74/00, H04L 5/00, H04W 48/16

(54) **METHOD AND APPARATUS FOR DETERMINING SIGNALING CHANNEL LOCATION**
VERFAHREN UND VORRICHTUNG ZUR BESTIMMUNG EINER SIGNALISIERUNGSKANALPOSITION
PROCÉDÉ ET APPAREIL POUR DÉTERMINER LA LOCALISATION D'UN CANAL DE SIGNALISATION

(43) Date of publication of application: 06.04.2016
(73) Proprietor: Huawei Technologies Co., Ltd., Longgang District Shenzhen, Guangdong 518129 (CN)
(72) Inventor: LUO, Yi, Shenzhen Guangdong 518129 (CN); LI, Yunbo, Shenzhen Guangdong 518129 (CN); WANG, Xuan, Shenzhen Guangdong 518129 (CN)
(74) Representative: Epping - Hermann - Fischer
(86) International application number: PCT/CN2013/078497
(87) International publication number: WO 2014/205837

(56) References cited:
- WO-A1-2013/025478
- CN-A- 1 104 402
- CN-A- 101 060 699
- CN-A- 101 242 245
- FUJITSU: "Motivation, Requirements and Design for ePCFICH", 3GPP DRAFT; R1-123303 MOTIVATION REQUIREMENTS AND DESIGN FOR EPCFICH READY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Qingdao, China; 20120813 - 20120817 5 August 2012 (2012-08-05), XP050661191, Retrieved from the Internet: URL:http://www.3gpp.org/ftp/tsg_ran/WG1_RL 1/TSGR1_70/Docs/ [retrieved on 2012-08-05]
- RENESAS MOBILE EUROPE LTD: "Need for dynamic indication of ePDCCH PRB pairs", 3GPP DRAFT; R1-123585, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661463, Retrieved from the Internet: URL:http://www.3gpp.org/ftp/tsg_ran/WG1_RL 1/TSGR1_70/Docs/ [retrieved on 2012-08-05]

## Description

### TECHNICAL FIELD

The present invention relates to communication technologies and, in particular, to a method and an apparatus for determining a location of a signaling channel.

### BACKGROUND

A communication system usually has a variety of channels, and some channels thereof are used for signaling transmission, which are referred to as signaling channels. A base station usually determines which channel to be used as a signaling channel, and after determining the signaling channel, the base station then informs a terminal of the signaling channel. If the terminal is not clear about which channel is the signaling channel, then signaling transmission cannot be performed, thus communications cannot be performed.

In the prior art, when not clearing about which channel is a signaling channel of a cell system where the terminal locates, the terminal will monitor each of the channels successively, and determines whether a channel that is monitored currently is the signaling channel of the cell system, if yes, then accesses the signaling channel to receive and transmit a signaling; if not, then turns to a next channel for monitoring, till it is determined that the channel that is monitored currently is the signaling channel.

However, since the cell system has a larger operation bandwidth, that is, there is a number of channels, whereas the signaling channel only occupies one channel generally, thus the process where the terminal monitors all channels in turn till the signaling channel is found consumes a lot of time, which results in low efficiency and increases a delay of data transmission performed by the terminal.

Document FUJITSU: "Motivation, Requirements and Design for ePCFICH", 3GPP DRAFT; R1-123303 MOTIVATION REQUIREMENTS AND DESIGN FOR EPCFICH READY, 3RD GENERATION PARTNERSHIP PROJECT (3GPP), MOBILE COMPETENCE CENTRE; 650, ROUTE DES LUCIOLES; F-06921 SOPHIA-ANTIPOLIS CED, vol. RAN WG1, no. Qingdao, China; 5 August 2012 relates to motivation, requirements and design for ePCFICH. The main target is to provide evidence for the necessity of ePCFICH. To achieve this, simulation is performed to compare resource efficiency with and without ePCFICH. Based on the simulation results, the following observation and proposal is obtained: For distributed ePDCCH, the dynamic configuration of ePDCCH resource could help to reduce resource wastage; ePCFICH should be supported to dynamically indicate the size and /or position of at least the distributed ePDCCH resources.

Document RENESAS MOBILE EUROPE LTD: "Need for dynamic indication of ePDCCH PRB pairs", 3GPP DRAFT; R1-123585, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Qingdao, China; 20120813-20120817 5 August 2012 relates to a need for dynamic indication of ePDCCH PRB pairs, wherein some views and results on the reuse of ePDCCH pairs for PDSCH are provided

### SUMMARY

Embodiments of the present invention provide a method and an apparatus for determining a location of a signaling channel, which are used to shorten the time for a terminal to search a signaling channel, and shorten the time required by the terminal to access a communication system, thereby improving access efficiency.

In the following, parts of the description and drawings referring to embodiments which are not covered by the claims are not presented as embodiments of the invention, but as examples useful for understanding the invention.

In a first aspect, an embodiment of the present invention provides a method for determining a location of a signaling channel in a Wi-Fi system, including:
selecting, by a terminal, any one of data channels from at least one channel;
reading, by the terminal, signaling channel indication information on the selected data channel; and
determining, by the terminal, a location of a signaling channel according to the signaling channel indication information;
where, before the reading, by the terminal, the signaling channel indication information on the selected data channel, it further includes:
sending, by the terminal, a signaling channel indication request to a base station on the selected data channel; and
receiving on the selected data channel, by the terminal, an indication message sent by the base station according to the signaling channel indication request, where the indication message includes the signaling channel indication information;
where the receiving on said any one of data channels, by the terminal, the signaling channel indication information sent by the base station includes:
   receiving on said any one of data channels, by the terminal, the indication message broadcast by the base station.

In a second aspect, an embodiment of the present invention provides a method for determining a location of a signaling channel in a Wi-Fi system, including:
setting, by a base station, an indication message, where the indication message includes signaling channel indication information; and
sending, by the base station, the indication message on at least one data channel, enabling a terminal to determine a location of a signaling channel according to the signaling channel indication information in the indication message;
where, before the sending, by the base station, the indication message on at least one data channel, it further includes:
receiving, by the base station, a signaling channel indication request sent by the terminal on a selected data channel;
the sending, by the base station, the indication message on at least one data channel includes: sending, by the base station, the indication message on the data channel according to the signaling channel indication request.

In a third aspect, an embodiment of the present invention provides an apparatus for determining a location of a signaling channel in a Wi-Fi system, including:
a data channel selecting module, configured to select any one of data channels from at least one channel;
a reading module, configured to read signaling channel indication information on the selected data channel; and
a signaling channel determining module, configured to determine a location of a signaling channel according to the signaling channel indication information;
where, it further includes:
   a request sending module, configured to send a signaling channel indication request to a base station on the selected data channel before reading the signaling channel indication information on the selected data channel; and
   a receiving module, configured to receive on the selected data channel an indication message sent by the base station according to the signaling channel indication request, where the indication message includes signaling channel indication information.

According to the first possible implementation of the third aspect, in a second possible implementation, the first receiving module is specifically configured to:
receive on said any one of data channels the indication message broadcast by the base station.

In a fourth aspect, an embodiment of the present invention provides an apparatus for determining a location of a signaling channel, including:
a setting module, configured to set an indication message, where the indication message includes signaling channel indication information; and
a sending module, configured to send the indication message on at least one data channel, enabling a terminal to determine a location of a signaling channel according to the signaling channel indication information in the indication message;
where, it further includes:
   a request receiving module, configured to receive a signaling channel indication request sent by the terminal on a selected data channel before sending the indication message on the data channel;
   the sending module is specifically configured to:
      send the indication message on the data channel according to the signaling channel indication request.

### BRIEF DESCRIPTION OF DRAWINGS

In order to make technical solutions in embodiments of the present invention or the prior art clearer, accompanying drawings used for description of the embodiments or the prior art will be briefly described hereunder. Obviously, the following described drawings are some embodiments of present invention. For persons skilled in the art, other drawings may be obtained based on these drawings without any creative effort.
FIG. 1 is a flow chart of embodiment 1 of a method for determining a location of a signaling channel according to the present invention;
FIG. 2 is a flow chart of embodiment 3 of a method for determining a location of a signaling channel according to the present invention;
FIG. 3 is a flow chart of embodiment 4 of a method for determining a location of a signaling channel according to the present invention;
FIG. 4 is a flow chart of embodiment 5 of a method for determining a location of a signaling channel according to the present invention;
FIG. 5 is a signaling flow chart of embodiment 6 of a method for determining a location of a signaling channel according to the present invention;
FIG. 6 is a schematic structural diagram of embodiment 1 of an apparatus for determining a location of a signaling channel according to the present invention;
FIG. 7 is a schematic structural diagram of embodiment 2 of an apparatus for determining a location of a signaling channel according to the present invention;
FIG. 8 is a schematic structural diagram of embodiment 3 of an apparatus for determining a location of a signaling channel according to the present invention;
FIG. 9 is a schematic structural diagram of embodiment 4 of an apparatus for determining a location of a signaling channel according to the present invention;
FIG. 10 is a schematic structural diagram of embodiment 5 of an apparatus for determining a location of a signaling channel according to the present invention;
FIG. 11 is a schematic structural diagram of an embodiment of a terminal according to the present invention; and
FIG. 12 is a schematic structural diagram of an embodiment of a base station according to the present invention.

### DESCRIPTION OF EMBODIMENTS

A communication system generally includes a plurality of channels, and according to different positions of a signaling channel and a data channel, designs of channels may be divided into an in-band design and an out-of-band design. Channels with the in-band design are hybrid channels, and each channel thereof has a signaling to control data communications of the current channel even other channels; a part of channels with the out-of-band design are specialized for data transmission, and a signaling is only sent on a part of frequency channels, these channels are signaling channels, while a part of signaling channels may also be used for data transmission, i.e., the hybrid channels as usually said. In embodiments of the present invention, channels (including signaling channels and hybrid channels) used for signaling transmission are referred to as signaling channels.

Embodiments of the present invention are not aimed at a multi-channel communication system with the out-of-band design. This kind of communication system usually includes at least one data channel and at least one signaling channel.

In a method and an apparatus for determining a location of a signaling channel provided in embodiments of the present invention, a new technical solution for querying a signaling channel is included, this technical solution is applicable to a process where a terminal accesses a cell system for the first time, and is also applicable to a process where a terminal accesses a cell system again after the terminal has accessed the system and lost a signaling channel.

The cell according to embodiments of the present invention includes a base station (Base Station, BS for short) and a plurality of terminals, where the base station may be an access point (Access Point, AP for short), a node B (Node B) or an evolution node B (Evolution Node B, eNode B for short), etc., the terminal may be a station (Station, STA for short), a user equipment (User Equipment, UE for short), etc, and the cell may be a basic service set (Basic Service Set, BSS for short), etc.

A location of a signaling channel according to embodiments of the present invention may be conceived as an identifier, a channel number and a frequency point of the signaling channel, which are used to indicate the location of the signaling channel in all channels, or, a location of a frequency resource where the signaling channel locates over a frequency domain.

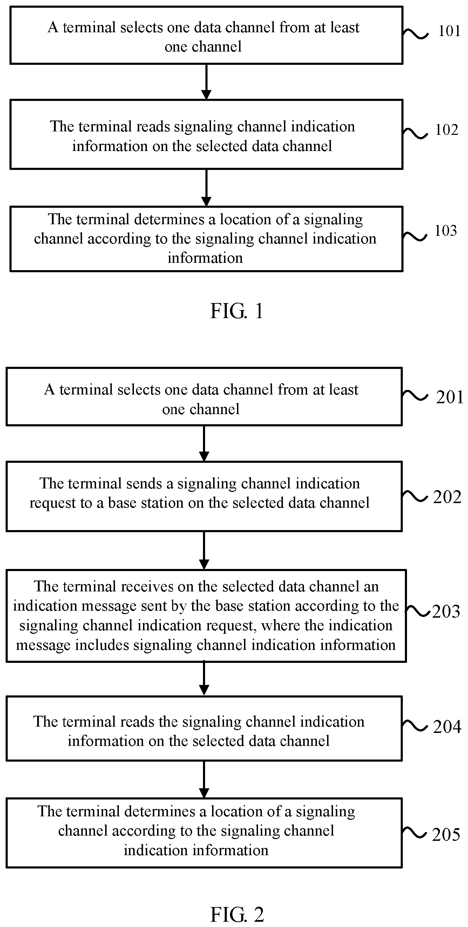

FIG. 1 is a flow chart of embodiment 1 of a method for determining a location of a signaling channel according to the present invention, and an executive body of this embodiment is a terminal. In this embodiment, after determining a signaling channel firstly, the terminal performs signaling transmission with a base station on the signaling channel to access a communication system where the base station locates. As shown in FIG. 1, the method for determining the location of the signaling channel in this embodiment may include:
Step 101, a terminal selects one data channel from at least one channel.

In a communication system, there are usually a plurality of channels, and the channels may be divided into the following two types according to functions of the channels: a signaling channel for signaling transmission and a data channel for data information transmission. Besides transmitting a signaling on the signaling channel, if there is a remaining resource, it may also be used to transmit data. The signaling channel and the data channel are referred to as operating channels collectively. Furthermore, the communication system may also have a non-operating channel. A base station usually determines which channel to be used as a signaling channel, and after determining the signaling channel, the base station then informs the terminal of the signaling channel. If the terminal is not clear about which channel is the signaling channel, then signaling transmission cannot be performed, thus communications cannot be performed. A scenario which enables the terminal to be not clear about which channel is the signaling channel is, for instance: the base station sends a signaling channel handover signaling to the terminal, but the terminal fails to receive the signaling correctly; or the terminal just falls into a service range of the base station.

Moreover, most of the operating channels may be data channels, and a small number of the operating channels may be signaling channels. Generally, a process for the terminal to access a cell system is: firstly select a channel, and detect whether the channel is an operating channel, if not, then select a next channel, and perform a detection again till the selected channel is the operating channel; then, find a signaling channel to perform the access in a next step. In this embodiment, after detecting that a channel is an operating channel, the terminal may also determine a location of the signaling channel according to subsequent steps even when the operating channel is a data channel. The data channel may be determined using a known manner in an existing system, and may also be determined using other manners, as long as the terminal is enabled to identify that the channel is a data channel of a present cell. One possible manner is to obtain that a station of the current system is sending a signal by detecting a synchronization sequence of a receiving frame, and then further determine whether the receiving channel is a data channel of the current cell in collaboration with a preset sequence or a bit field indicator in the receiving frame. Another possible manner is to use different synchronization sequences for data channels of different cells, thus it may be directly determined whether the channel is a data channel of the current cell by matching the synchronization sequences of a receiving frame. As for a special scenario where a channel that is detected by the terminal for the first time is a signaling channel, the terminal may read information on the channel directly to determine the signaling channel, and may also continue to detect the channel according to the method in this embodiment till a data channel is selected, and then determine a location of the signaling channel according to subsequent steps.

It should be noted that, in an implementation of this patent, signaling channel indication information needs to be sent in the data channel, or the signaling channel indication information is sent after a signaling channel indication request sent by the terminal on the data channel is received. Although the signaling channel indication information and the signaling channel indication request herein may be conceived as signaling information, for convenience of description, during a process of explanation of the implementation of this patent, the data channel on which the signaling channel indication information and the signaling channel indication request are transmitted is still referred to as a data channel.

The terminal may select a channel randomly or select a channel according to a preset sequence, and the embodiment of the present invention will not make a limitation to this.

Step 102, the terminal reads signaling channel indication information on the selected data channel.

Specifically, the signaling channel indication information may include a channel number of a signaling channel, or other information that enables the terminal to determine the signaling channel. If the communication system includes a plurality of signaling channels, then according to a specific requirement for signaling transmission, the signaling channel indication information may include respective channel numbers of the plurality of signaling channels.

In the prior art, the terminal determines a signaling channel by means of scanning. A basic process of channel scanning may be: the terminal selects a channel, and then determines whether a to-be-accessed basic service set (Basic Service Set, BSS for short) is on the channel by means of passive interception or active probe on the channel, if the terminal determines that the to-be-accessed BSS is not included on the channel, then another channel is selected to repeat the above detection process. A main principle for the passive interception is that, an AP or a base station of the to-be-accessed BSS will send a beacon frame (Beacon) on an operating channel periodically, where the beacon frame includes an identifier and an operating channel of the BSS, and the terminal determines whether the to-be-accessed BSS works on the channel according to whether the beacon frame and contents in the beacon frame are received. If the terminal fails to receive the beacon frame within a preset time, or an identifier of the received beacon frame is not in compliance with the identifier of the to-be-accessed BSS, then it indicates that the to-be-accessed BSS does not work on the channel. A main principle for the active probe is that, a station sends a probe request frame (Probe Request) on the channel, and then waits for receiving a probe response frame (Probe Response). If the terminal fails to receive the probe response frame within a preset time, or an identifier of the received probe response frame is not in compliance with that of the to-be-accessed BSS, then it indicates that the to-be-accessed BSS does not work on the channel.

For instance, an unlicensed band (Unlicensed Band) available on a wireless local area network (wireless local area network, WLAN for short) of 5GHz spectrums is 480MHz, while a basic bandwidth of a channel is 20MHz, then during an access process, the terminal may need to scan 24 channels, and intercept each channel till the intercepted channel is a signaling channel, which causes the access process consume a lot of time.

In step 102, the terminal reads the signaling channel indication information on the selected data channel, so that the signaling channel may be determined after the terminal selects a first data channel, thereby avoiding a process where the signaling channel is found after the terminal intercepts a plurality of data channels, and saving the time to determine a location of the signaling channel.

Specifically, the signaling channel indication information may be sent by the base station according to a preset time period on each data channel or each operating channel, or, may also be obtained by receiving a response returned by the base station on the selected data channel after the terminal actively sends a signaling channel indication request to the base station on the selected data channel, or, the selected data channel may also be enabled to include the signaling channel indication through other manners.

Step 103, the terminal determines a location of a signaling channel according to the signaling channel indication information.

After determining the location of the signaling channel, the terminal may perform signaling transmission with the base station, thereby accessing a cell system where the base station locates. In this embodiment, the terminal reads the signaling channel indication information on the selected data channel, so that the terminal can obtain information about the signaling channel through the data channel after determining that the selected channel is the data channel, thereby avoiding a process where a plurality of data channels are scanned till the signaling channel is determined, which thus is able to reduce the time required for determining the signaling channel and accessing the communication system, and improve efficiency.

In embodiment 2 of the method for determining the location of the signaling channel of the present invention, before step 102 of the above embodiment, the following step may also be included: the terminal receives on at least one data channel an indication message sent by the base station, where the indication message includes the signaling channel indication information. That is, before step 102, the base station has issued an indication message on a part of or all data channels, where the indication message includes the signaling channel indication information. Furthermore, specifically, the above step may be: the terminal receives the indication message sent by the base station on any one of the data channels.

Correspondingly, the base station may broadcast the signaling channel indication information on each operating channel or each data channel of the cell system according to a preset time period. Thus, as long as the selected channel is determined as a data channel, the terminal may read the signaling channel indication information in the indication message broadcast by the base station on the data channel, thereby determining the signaling channel.

FIG. 2 is a flow chart of embodiment 3 of a method for determining a location of a signaling channel according to the present invention, and an executive body of this embodiment is a terminal. Based on the embodiment as shown in FIG. 1, this embodiment adds a process where the terminal performs an interaction with a base station on any one of data channels so as to enable the base station to send a signaling channel indication. As shown in FIG. 2, the method in this embodiment may include:
Step 201, a terminal selects one data channel from at least one channel.
Step 202, the terminal sends a signaling channel indication request to a base station on the selected data channel.
Step 203, the terminal receives on the selected data channel an indication message sent by the base station according to the signaling channel indication request, where the indication message includes signaling channel indication information.

Specifically, the terminal may send a request frame indicated by a signaling channel to the base station on the selected data channel, subsequently the terminal waits for receiving on the data channel the indication message replied by the base station, and the indication message may include the signaling channel indication information.

204, the terminal reads the signaling channel indication information on the selected data channel. 205, the terminal determines a location of a signaling channel according to the signaling channel indication information.

In this embodiment, the terminal may send a signaling channel indication request to the base station on any one of data channels, and determine a location of a signaling channel according to signaling channel indication information replied by the base station, thereby avoiding a process where a plurality of data channels are scanned till the signaling channel is determined, which thus is able to reduce the time to determine the signaling channel, reduce the time to access a communication system, and improve efficiency.

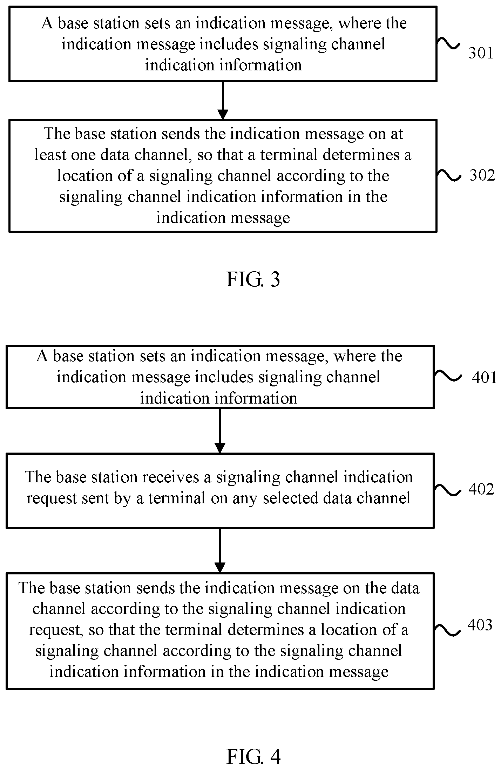

FIG. 3 is a flow chart of embodiment 4 of a method for determining a location of a signaling channel according to the present invention, and an executive body of this embodiment is a base station. In this embodiment, the base station transmits a signaling channel indication information, so that a terminal performs signaling transmission with the base station on a signaling channel after determining the signaling channel so as to access a communication system where the base station locates. As shown in FIG. 3, a method for determining a location of a signaling channel according to this embodiment may include:
Step 301, a base station sets an indication message, where the indication message includes signaling channel indication information.
Step 302, the base station sends the indication message on at least one data channel, so that a terminal determines a location of a signaling channel according to the signaling channel indication information in the indication message.

The base station may transmit the indication message to a terminal or other base stations by means of broadcasting or unicasting.

In the prior art, the base station usually transmits an indication message of a signaling channel only on the signaling channel, and when failing to successfully receive the indication message, the terminal is not clear about which channel is the signaling channel, and then signaling transmission cannot be performed. For instance, when the signaling channel is performed a handover, the base station will send a handover signaling on the signaling channel. When the terminal fails to receive the handover signaling due to being in a sleeping period or other reasons, the terminal loses a signaling channel of the cell system where the base station locates, at this time, the terminal needs to find the signaling channel as soon as possible; for another example, when the terminal is just falling into a range of the cell system of the base station, the signaling channel also needs to be found as soon as possible. In the prior art, the terminal needs to intercept currently selected channels one by one to determine whether the channel is a signaling channel.

In step 302 of this embodiment, the base station may send an indication message on a data channel currently selected by the terminal, so that the terminal determines a signaling channel according to signaling channel indication information included in the indication message. Specifically, the base station may send an indication message including the signaling channel indication information according to a preset time period on each data channel, or, the terminal may also be replied by the base station on the data channel after the terminal actively sends a signaling channel indication request to the base station on the selected data channel, or, the selected data channel may also be enabled to include the signaling channel indication through other manners.

After the terminal determines the signaling channel, signaling transmission may be performed between the base station and the terminal, thereby enabling the terminal to access the cell system where the base station locates.

In this embodiment, a base station sends an indication message including signaling channel indication information on a data channel selected by a terminal, so that the terminal can obtain information about a signaling channel through the data channel after determining that the selected channel is the data channel, thereby avoiding a process for the terminal to scan a plurality of data channels till the signaling channel is determined, which thus is able to reduce the time required for determining the signaling channel and accessing a communication system, and improve efficiency.

According to the above embodiment, in a possible implementation, step 302 may be: the base station may issue an indication message including the signaling channel indication information on a part of or all data channels.

Furthermore, specifically, the above step may be: the base station broadcasts the indication message including the signaling channel indication information on each data channel according to a preset time period.

Correspondingly, the terminal may receive on any one of the data channels of the cell system the indication message broadcast by the base station. Thus, as long as the selected channel is determined as a data channel, the terminal may read the signaling channel indication information in the indication message broadcast by the base station on the data channel, thereby determining the signaling channel.

FIG. 4 is a flow chart of embodiment 5 of a method for determining a location of a signaling channel according to the present invention, and an executive body of this embodiment is a base station. Based on the embodiment as shown in FIG. 3, this embodiment adds a process where the base station performs an interaction with a terminal on any one of data channels so as to send an indication message including a signaling channel indication. As shown in FIG. 4, the method in this embodiment may include:
Step 401, a base station sets an indication message, where the indication message includes signaling channel indication information.
Step 402, the base station receives a signaling channel indication request sent by a terminal on any selected data channel.
Step 401 and Step 402 do not have a strict sequence, as long as Step 401 is performed completely before Step 403.

Specifically, the signaling channel indication request may be a request frame of a signaling channel indication which may be sent by the terminal to the base station on the selected data channel.

Step 403, the base station sends the indication message on the data channel according to the signaling channel indication request, so that the terminal determines a location of a signaling channel according to the signaling channel indication information in the indication message. The base station may make a reply on the same data channel only after receiving the signaling channel indication request, in this way, the base station may send the signaling channel indication information targetedly, so that the terminal determines the signaling channel swiftly. Step 403 may adopt a unicast mode to respond the terminal on the same data channel, and may also adopt a broadcast mode to send the indication message on all operating channels. Subsequently, the base station may send a signaling to the terminal on the signaling channel or receives a signaling sent by the terminal.

In this embodiment, the base station may make a reply according to a signaling channel indication request sent by the terminal on any one of the data channels, and carry signaling channel indication information in an indication message replied, so that the terminal determines a signaling channel, thereby avoiding a process where the terminal scans a plurality of data channels till the signaling channel is determined, which thus is able to reduce the time required for determining the signaling channel and accessing a communication system, and improve efficiency.

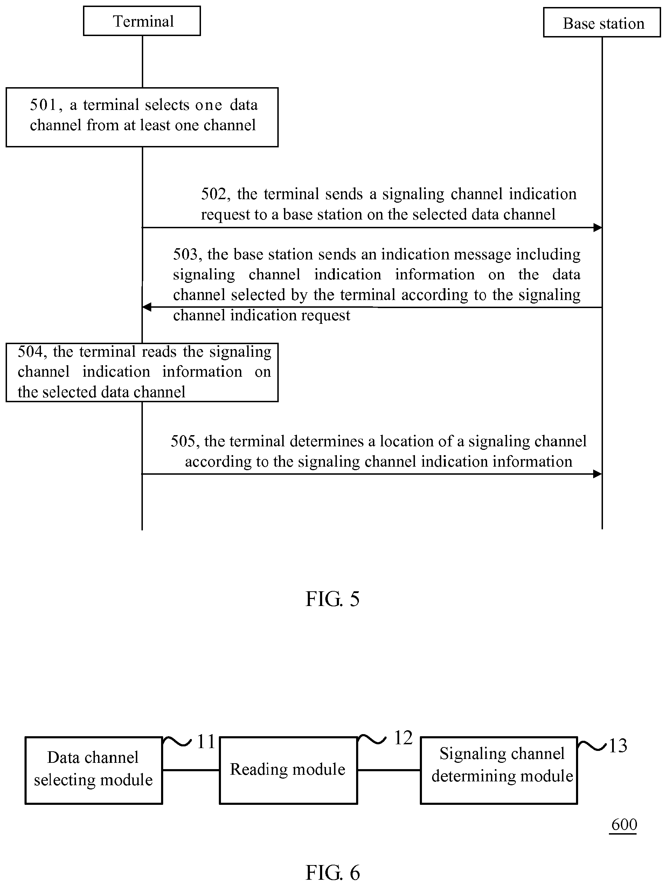

FIG. 5 is a signaling flow chart of embodiment 6 of a method for determining a location of a signaling channel according to the present invention, and FIG. 5 shows a process where a terminal performs an interaction with a base station, as shown in FIG. 5, steps of this embodiment may include:
Step 501, a terminal selects one data channel from at least one channel.
Step 502, the terminal sends a signaling channel indication request to a base station on the selected data channel.
Step 503, the base station sends an indication message including signaling channel indication information on the data channel selected by the terminal according to the signaling channel indication request.
Step 504, the terminal reads the signaling channel indication information on the selected data channel.
Step 505, the terminal determines a location of a signaling channel according to the signaling channel indication information.

In this embodiment, the terminal may send a signaling channel indication request to the base station on any one of data channels, and determine a signaling channel according to signaling channel indication information replied by the base station, thereby avoiding a process where a plurality of data channels are scanned till the signaling channel is determined, which thus is able to reduce the time required for determining the signaling channel and accessing a communication system, and improve efficiency.

In another possible implementation, Step 502 and Step 503 may be replaced with the following steps: the base station broadcasts an indication message including signaling channel indication information on each data channel according to a preset time period. Other steps may be the same as those in the above embodiment. Moreover, this replacement step does not have a sequenced relationship with Step 501.

In this implementation, since the signaling channel indication information is included on each data channel, the terminal may obtain the signaling channel indication information on any data channel selected so as to determine a signaling channel.

FIG. 6 is a schematic structural diagram of embodiment 1 of an apparatus for determining a location of a signaling channel according to the present invention, and the apparatus in this embodiment may be integrated in a terminal, or may be the terminal itself. As shown in FIG. 6, the apparatus 600 in this embodiment may include: a data channel selecting module 11, a reading module 12 and a signaling channel determining module 13, wherein,
the data channel selecting module 11 may be configured to select one data channel from at least one channel;
The reading module 12 may be configured to read signaling channel indication information on the selected data channel;
The signaling channel determining module 13 may be configured to determine a location of a signaling channel according to the signaling channel indication information.

The apparatus in this embodiment may be configured to implement the technical solution of the method embodiment as shown in FIG. 1, and has corresponding function modules; an implementation principle thereof is similar to the embodiment as shown in FIG. 1, which will not be repeated herein.

The apparatus in this embodiment may enable a terminal to read signaling channel indication information on a selected data channel, so that the terminal can obtain information about a signaling channel through the data channel after determining that the selected channel is the data channel, thereby avoiding a process where a plurality of data channels are scanned till the signaling channel is determined, which thus is able to reduce the time required for determining the signaling channel and accessing the communication system, and improve efficiency.

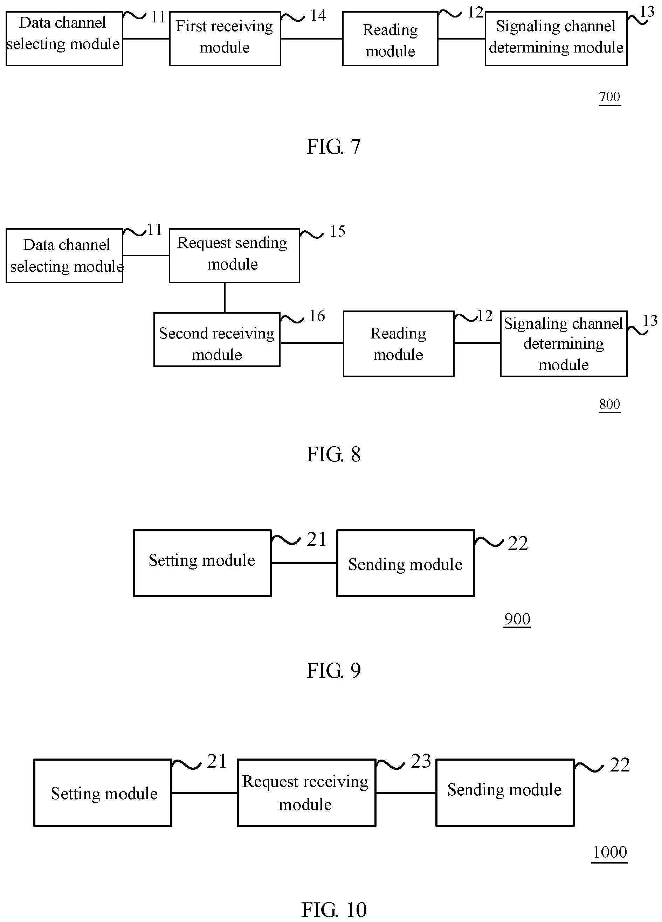

FIG. 7 is a schematic structural diagram of embodiment 2 of an apparatus for determining a location of a signaling channel according to the present invention, and the apparatus in this embodiment may be integrated in a terminal, or may be the terminal itself. As shown in FIG. 7, based on the apparatus as shown in FIG. 6, the apparatus 700 in this embodiment may also include: a first receiving module 14, where the first receiving module 14 may be configured to receive, on at least one data channel, signaling channel indication information sent by a base station before reading the signaling channel indication information on the selected data channel.

Furthermore, the first receiving module 14 may be specifically configured to:
receive on any one of data channels an indication message broadcast by the base station, where the indication message includes signaling channel indication information.

The apparatus in this embodiment may be configured to implement the technical solution of embodiment 2 of the method for determining the location of the signaling channel according to the present invention, and has corresponding function modules; an implementation principle and a technical effect thereof are similar to embodiment 2 of the method for determining the location of the signaling channel according to the present invention, which will not be repeated herein. FIG. 8 is a schematic structural diagram of embodiment 3 of an apparatus for determining a location of a signaling channel according to the present invention, and the apparatus in this embodiment may be integrated in a terminal, or may be the terminal itself. As shown in FIG. 8, based on the apparatus as shown in FIG. 6, the apparatus 800 in this embodiment may also include: a request sending module 15 and a second receiving module 16.

The request sending module 15 may be configured to send a signaling channel indication request to a base station on the selected data channel before reading the signaling channel indication information on the selected data channel.

The second receiving module 16 may be configured to receive on the selected data channel an indication message which is sent by the base station according to the signaling channel indication request, where the indication message includes signaling channel indication information.

The apparatus in this embodiment may be configured to implement the technical solution of embodiment 3 of the method for determining the location of the signaling channel according to the present invention, and has corresponding function modules; an implementation principle and a technical effect thereof are similar to embodiment 3 of the method for determining the location of the signaling channel according to the present invention, which will not be repeated herein. FIG. 9 is a schematic structural diagram of embodiment 4 of an apparatus for determining a location of a signaling channel according to the present invention, and the apparatus in this embodiment may be integrated in a base station, or may be the base station itself. As shown in FIG. 9, the apparatus 900 in this embodiment may include: a setting module 21 and a sending module 22.

The setting module 21 is configured to set an indication message, where the indication message includes signaling channel indication information;

The sending module 22 may be configured to send the indication message on at least one data channel, so that a terminal determines a location of a signaling channel according to the signaling channel indication information in the indication message.

The apparatus in this embodiment may be configured to implement the technical solution of the method embodiment as shown in FIG. 3, and has corresponding function modules; an implementation principle thereof is similar to the embodiment as shown in FIG. 3, which will not be repeated herein.

The apparatus in this embodiment enables a base station to send signaling channel indication information on a data channel selected by a terminal, so that the terminal can obtain information about a signaling channel through the data channel after determining that the selected channel is the data channel, thereby avoiding a process for the terminal to scan a plurality of data channels till the signaling channel is determined, which thus is able to reduce the time required for determining the signaling channel and accessing a communication system, and improve efficiency.

Furthermore, specifically, the sending module 22 may be specifically configured to:
send the indication message on each data channel according to a preset time period.

FIG. 10 is a schematic structural diagram of embodiment 5 of an apparatus for determining a location of a signaling channel according to the present invention, and the apparatus in this embodiment may be integrated in a base station, or may be the base station itself. As shown in FIG. 10, based on the apparatus as shown in FIG. 9, the apparatus 1000 in this embodiment may also include: a request receiving module 23.

The request receiving module 23 may be configured to receive a signaling channel indication request sent by the terminal on any selected data channel before sending the indication message on the data channel;

The sending module 22 may be specifically configured to:
send the indication message on the data channel according to the signaling channel indication request.

The apparatus in this embodiment may be configured to implement the technical solution of the method embodiment as shown in FIG. 4, and has corresponding function modules; an implementation principle and a technical effect thereof are similar to the embodiment as shown in FIG. 4, which will not be repeated herein.

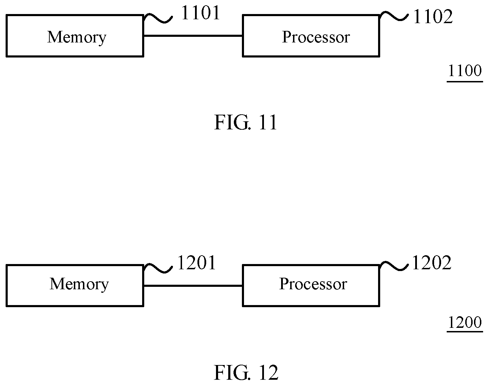

FIG. 11 is a schematic structural diagram of an embodiment of a terminal according to the present invention, as shown in FIG. 11, the terminal 1100 in this embodiment may include: a memory 1101 and a processor 1102.

The memory 1101 is configured to store instructions;

The processor 1102 is coupled to the memory, where the processor is configured to execute the instructions stored in the memory, and the processor is configured to perform a method for determining a location of a signaling channel as executed by a terminal in any embodiment of the present invention.

FIG. 12 is a schematic structural diagram of an embodiment of a base station according to the present invention, and as shown in FIG. 12, the base station 1200 in this embodiment may include: a memory 1201 and a processor 1202, wherein,
the memory 1201 is configured to store instructions;
the processor 1202 is coupled to the memory, where the processor is configured to execute the instructions stored in the memory, and the processor is configured to perform a method for determining a location of a signaling channel as executed by a base station in any embodiment of the present invention.

## Claims

1. A method for determining a location of a signaling channel in a Wi-Fi system, the method comprising:
selecting (101, 201), by a terminal, any one of data channels from at least one channel;
reading (102, 204), by the terminal, signaling channel indication information on the selected data channel; and
determining (103, 205), by the terminal, a location of a signaling channel according to the signaling channel indication information;
wherein, before the reading (204), by the terminal, the signaling channel indication information on the selected data channel, it further comprises:
sending (202), by the terminal, a signaling channel indication request to a base station on the selected data channel; and
receiving (203) on the selected data channel, by the terminal, an indication message sent by the base station according to the signaling channel indication request, wherein the indication message comprises the signaling channel indication information.

2. The method according to claim 1, wherein, the receiving (203) on said any one of data channels, by the terminal, the indication message sent by the base station comprises:
receiving on said any one of data channels, by the terminal, the indication message broadcast by the base station.

3. A method for determining a location of a signaling channel in a Wi-Fi system, the method comprising:
setting (301, 401), by a base station, an indication message, wherein the indication message comprises signaling channel indication information; and
sending (302), by the base station, the indication message on at least one data channel, enabling a terminal to determine a location of a signaling channel according to the signaling channel indication information in the indication message;
wherein, before the sending (302), by the base station, the indication message on at least one data channel, it further comprises:
receiving (402), by the base station, a signaling channel indication request sent by the terminal on a selected data channel;
the sending (302), by the base station, the indication message on at least one data channel comprises:
sending (403), by the base station, the indication message on the data channel according to the signaling channel indication request.

4. An apparatus for determining a location of a signaling channel in a Wi-Fi system, the apparatus comprising:
a data channel selecting module (11), configured to select any one of data channels from at least one channel;
a reading module (12), configured to read signaling channel indication information on the selected data channel; and
a signaling channel determining module (13), configured to determine a location of a signaling channel according to the signaling channel indication information;
wherein, it further comprises:
a request sending module (15), configured to send a signaling channel indication request to a base station on the selected data channel before reading the signaling channel indication information on the selected data channel; and
a receiving module (14), configured to receive on the selected data channel an indication message sent by the base station according to the signaling channel indication request, wherein the indication message comprises signaling channel indication information.

5. The apparatus according to claim 4, wherein, the first receiving module (14) is specifically configured to:
receive on said any one of data channels the indication message broadcast by the base station.

6. An apparatus for determining a location of a signaling channel in a Wi-Fi system, the apparatus comprising:
a setting module (21), configured to set an indication message, wherein the indication message comprises signaling channel indication information; and
a sending module (22), configured to send the indication message on at least one data channel, enabling a terminal to determine a location of a signaling channel according to the signaling channel indication information in the indication message;
wherein, it further comprises:
a request receiving module (23), configured to receive a signaling channel indication request sent by the terminal on a selected data channel before sending the indication message on the data channel;
the sending module (22) is specifically configured to:
send the indication message on the data channel according to the signaling channel indication request.

## Patentansprüche

1. Verfahren zum Bestimmen einer Position eines Signalisierungskanals in einem Wi-Fi-System, wobei das Verfahren umfasst:
Auswählen (101, 201), durch ein Endgerät, eines beliebigen von Datenkanälen aus mindestens einem Kanal;
Lesen (102, 204), durch das Endgerät, von Signalisierungskanalanzeigeinformationen auf dem ausgewählten Datenkanal; und
Bestimmen (103, 205), durch das Endgerät, einer Position eines Signalisierungskanals gemäß den Signalisierungskanalanzeigeinformationen;
wobei das Verfahren vor dem Lesen (204), durch das Endgerät, der Signalisierungskanalanzeigeinformationen auf dem ausgewählten Datenkanal ferner umfasst:
Senden (202), durch das Endgerät, einer Signalisierungskanalanzeigeanforderung an eine Basisstation auf dem ausgewählten Datenkanal; und
Empfangen (203) auf dem ausgewählten Datenkanal, durch das Endgerät, einer von der Basisstation gemäß der Signalisierungskanalanzeigeanforderung gesendeten Anzeigenachricht, wobei die Anzeigenachricht die Signalisierungskanalanzeigeinformationen umfasst.

2. Verfahren nach Anspruch 1, wobei das Empfangen (203) auf dem beliebigen von Datenkanälen, durch das Endgerät, der von der Basisstation gesendeten Anzeigenachricht umfasst:
Empfangen auf dem beliebigen von Datenkanälen, durch das Endgerät, der von der Basisstation rundgesendeten Anzeigenachricht.

3. Verfahren zum Bestimmen einer Position eines Signalisierungskanals in einem Wi-Fi-System, wobei das Verfahren umfasst:
Einstellen (301, 401), durch eine Basisstation, einer Anzeigenachricht, wobei die Anzeigenachricht Signalisierungskanalanzeigeinformationen umfasst; und
Senden (302), durch die Basisstation, der Anzeigenachricht auf mindestens einem Datenkanal, wodurch einem Endgerät ermöglicht wird, eine Position eines Signalisierungskanals gemäß den Signalisierungskanalanzeigeinformationen in der Anzeigenachricht zu bestimmen;
wobei das Verfahren vor dem Senden (302), durch die Basisstation, der Anzeigenachricht auf mindestens einem Datenkanal ferner umfasst:
Empfangen (402), durch die Basisstation, einer vom Endgerät auf einem ausgewählten Datenkanal gesendeten Signalisierungskanalanzeigeanforderung;
wobei das Senden (302), durch die Basisstation, der Anzeigenachricht auf mindestens einem Datenkanal umfasst:
Senden (403), durch die Basisstation, der Anzeigenachricht auf dem Datenkanal gemäß der Signalisierungskanalanzeigeanforderung.

4. Vorrichtung zum Bestimmen einer Position eines Signalisierungskanals in einem Wi-Fi-System, wobei die Vorrichtung umfasst:
ein Datenkanalauswahlmodul (11), das dafür ausgelegt ist, einen beliebigen von Datenkanälen aus mindestens einem Kanal auszuwählen;
ein Lesemodul (12), das dafür ausgelegt ist, Signalisierungskanalanzeigeinformationen auf dem ausgewählten Datenkanal zu lesen; und
ein Signalisierungskanalbestimmungsmodul (13), das dafür ausgelegt ist, eine Position eines Signalisierungskanals gemäß den Signalisierungskanalanzeigeinformationen zu bestimmen;
wobei die Vorrichtung ferner umfasst:
ein Anforderungssendemodul (15), das dafür ausgelegt ist, eine Signalisierungskanalanzeigeanforderung an eine Basisstation auf dem ausgewählten Datenkanal zu senden, bevor es die Signalisierungskanalanzeigeinformationen auf dem ausgewählten Datenkanal liest; und
ein Empfangsmodul (14), das dafür ausgelegt ist, auf dem ausgewählten Datenkanal eine von der Basisstation gemäß der Signalisierungskanalanzeigeanforderung gesendete Anzeigenachricht zu empfangen, wobei die Anzeigenachricht Signalisierungskanalanzeigeinformationen umfasst.

5. Vorrichtung nach Anspruch 4, wobei das erste Empfangsmodul (14) spezifisch für folgenden Vorgang ausgelegt ist:
Empfangen, auf dem beliebigen von Datenkanälen, der von der Basisstation rundgesendeten Anzeigenachricht.

6. Vorrichtung zum Bestimmen einer Position eines Signalisierungskanals in einem Wi-Fi-System, wobei die Vorrichtung umfasst:
ein Einstellmodul (21), das dafür ausgelegt ist, eine Anzeigenachricht einzustellen, wobei die Anzeigenachricht Signalisierungskanalanzeigeinformationen umfasst; und
ein Sendemodul (22), das dafür ausgelegt ist, die Anzeigenachricht auf mindestens einem Datenkanal zu senden, wodurch einem Endgerät ermöglicht wird, eine Position eines Signalisierungskanals gemäß den Signalisierungskanalanzeigeinformationen in der Anzeigenachricht zu bestimmen;
wobei die Vorrichtung ferner umfasst:
ein Anforderungsempfangsmodul (23), das dafür ausgelegt ist, eine vom Endgerät auf einem ausgewählten Datenkanal gesendete Signalisierungskanalanzeigeanforderung zu empfangen, bevor es die Anzeigenachricht auf dem Datenkanal sendet;
wobei das Sendemodul (22) spezifisch ausgelegt ist zum:
Senden der Anzeigenachricht auf dem Datenkanal gemäß der Signalisierungskanalanzeigeanforderung.

## Revendications

1. Procédé pour déterminer une localisation d'un canal de signalisation dans un système Wi-Fi, le procédé comprenant les étapes consistant à :
sélectionner (101, 201), par un terminal, un quelconque des canaux de données parmi au moins un canal ;
lire (102, 204), par le terminal, une information d'indication de canal de signalisation sur le canal de données sélectionné ; et
déterminer (103, 205), par le terminal, une localisation d'un canal de signalisation selon l'information d'indication de canal de signalisation ;
le procédé comprenant en outre, avant la lecture (204), par le terminal, de l'information d'indication de canal de signalisation sur le canal de données sélectionné, les étapes consistant à :
envoyer (202), par le terminal, une demande d'indication de canal de signalisation à une station de base sur le canal de données sélectionné ; et
recevoir (203) sur le canal de données sélectionné, par le terminal, un message d'indication envoyé par la station de base selon la demande d'indication de canal de signalisation, le message d'indication comprenant l'information d'indication de canal de signalisation.

2. Procédé selon la revendication 1, dans lequel la réception (203) sur ledit quelconque des canaux de données, par le terminal, du message d'indication envoyé par la station de base comprend l'étape consistant à :
recevoir sur ledit quelconque des canaux de données, par le terminal, le message d'indication diffusé par la station de base.

3. Procédé pour déterminer une localisation d'un canal de signalisation dans un système Wi-Fi, le procédé comprenant les étapes consistant à :
définir (301, 401), par une station de base, un message d'indication, le message d'indication comprenant une information d'indication de canal de signalisation ; et
envoyer (302), par la station de base, le message d'indication sur au moins un canal de données, ce qui permet à un terminal de déterminer une localisation d'un canal de signalisation selon l'information d'indication de canal de signalisation dans le message d'indication ;
le procédé comprenant en outre, avant l'envoi (302), par la station de base, du message d'indication sur au moins un canal de données, l'étape consistant à :
recevoir (402), par la station de base, une demande d'indication de canal de signalisation envoyée par le terminal sur un canal de données sélectionné ;
l'envoi (302), par la station de base, du message d'indication sur au moins un canal de données, comprenant l'étape consistant à :
envoyer (403), par la station de base, le message d'indication sur le canal de données selon la demande d'indication de canal de signalisation.

4. Appareil pour déterminer une localisation d'un canal de signalisation dans un système Wi-Fi, l'appareil comprenant :
un module de sélection de canal de données (11),configuré pour sélectionner un quelconque des canaux de données parmi au moins un canal ;
un module de lecture (12), configuré pour lire une information d'indication de canal de signalisation sur le canal de données sélectionné ; et
un module de détermination de canal de signalisation (13), configuré pour déterminer une localisation d'un canal de signalisation selon l'information d'indication de canal de signalisation ;
l'appareil comprenant en outre :
un module d'envoi de demande (15), configuré pour envoyer une demande d'indication de canal de signalisation à une station de base sur le canal de données sélectionné avant la lecture de l'information d'indication de canal de signalisation sur le canal de données sélectionné ; et
un module de réception (14), configuré pour recevoir sur le canal de données sélectionné un message d'indication envoyé par la station de base selon la demande d'indication de canal de signalisation, le message d'indication comprenant une information d'indication de canal de signalisation.

5. Appareil selon la revendication 4, dans lequel le premier module de réception (14) est spécifiquement configuré pour :
recevoir sur ledit quelconque des canaux de données le message d'indication diffusé par la station de base.

6. Appareil pour déterminer une localisation d'un canal de signalisation dans un système Wi-Fi, l'appareil comprenant :
un module de définition (21), configuré pour définir un message d'indication, le message d'indication comprenant une information d'indication de canal de signalisation ; et
un module d'envoi (22), configuré pour envoyer le message d'indication sur au moins un canal de données, ce qui permet à un terminal de déterminer une localisation d'un canal de signalisation selon l'information d'indication de canal de signalisation dans le message d'indication ;
l'appareil comprenant en outre :
un module de réception de demande (23), configuré pour recevoir une demande d'indication de canal de signalisation envoyée par le terminal sur un canal de données sélectionné avant l'envoi du message d'indication sur le canal de données ;
le module d'envoi (22) étant spécifiquement configuré pour :
envoyer le message d'indication sur le canal de données selon la demande d'indication de canal de signalisation.
